# EUROPÄISCHE PATENTSCHRIFT

(11) **EP 1 594 675 B1**
(45) Veröffentlichungstag und Bekanntmachung des Hinweises auf die Patenterteilung: **01.10.2008**
(21) Anmeldenummer: 04710338.7
(22) Anmeldetag: 12.02.2004
(51) Int. Cl.: B29C 65/18

(54) **DRUCKSTEMPEL-VORRICHTUNG ZUM FOLIENVERSIEGELN**
PRESSURE-PUNCH DEVICE FOR FILM WELDING
DISPOSITIF TAMPON DE PRESSION POUR SOUDER DES FEUILLES

(30) Priorität: 18.02.2003 DE 10306628
(43) Veröffentlichungstag der Anmeldung: 16.11.2005
(73) Patentinhaber: Bentele, Josef, 88471 Laupheim (DE)
(72) Erfinder: Bentele, Josef, 88471 Laupheim (DE)
(74) Vertreter: Meyer, Thorsten
(86) Internationale Anmeldenummer: PCT/DE2004/000252
(87) Internationale Veröffentlichungsnummer: WO 2004/073960

(56) Entgegenhaltungen:
- WO-A-02/37897
- DE-A- 1 956 717
- GB-A- 2 033 831
- GB-A- 2 289 237
- US-A- 4 353 855

## Beschreibung

Die Erfindung betrifft eine Druckstempel-Vorrichtung zum Versiegeln von Folien, mit einem beheizbaren Stempelelement mit einer Stempelfläche zum Ausüben eines Druckes auf eine erste Folie, um diese mit einer abgestützt gelagerten zweiten Folie zu verbinden, wobei das Stempelelement mehrschichtig aufgebaut ist und im wesentlichen drei Schichten enthält.

### Stand der Technik

Druckstempel-Vorrichtungen der eingangs genannten Art werden im Stand der Technik verwendet, um eine dauerhafte Verbindung zwischen zwei Folien herzustellen. Die bekannten Vorrichtungen weisen jedoch den Nachteil auf, dass eine gleichverteilte gleichförmige Druckbeaufschlagung einer Folie seitens einer Stempelfläche eines Stempelelementes nicht ermöglicht ist. Dies hat folgende Ursachen:
Herkömmliche Druckstempel-Vorrichtungen werden in der Regel direkt über in Bohrungen geführten Heizelementen beheizt und sind dabei mehrheitlich aus Stahl oder einem anderen harten Metall hergestellt. Die indirekte Beheizung hat dabei eine inhomogenen Temperaturverteilung innerhalb eines Druckstempels zur Folge, wobei nahe an einem Heizelement befindliche Bereiche des Druckstempels eine höhere Temperatur als entfernt von einem Heizelement befindliche Bereiche aufweisen. Dies bedingt bei einem für ein Verbinden zweier Folien notwendigen Beheizungsvorgang unterschiedliche stark ausgeprägte Ausdehnungen unterschiedlicher Stellen des Stahls eines Druckstempels, wobei in der Stempelfläche ein Höhenprofil entsteht, dass eine gleichmäßige Druckaufbringung auf eine Folie verhindert mit der Folge, dass vorstehende Stempelbereiche einen höheren Druck als zurückstehende Stempelbereiche auf eine Folie aufbringen. In Bereichen vergleichsweise niedrigen Druckes bewirkt dies eine schlechte Verschweißung zweier Folien. Klassischerweise kann eine Folie eine Dicke von 20 [mu] aufweisen, wobei Toleranzabweichungen seitens der Druckstempel von etwa 20 [mu] schon große Qualitätseinbussen bewirken können. Der Stahl eines Druckstempels weist dabei typischerweise eine Temperatur von etwa 150[deg.] bis 250[deg.] auf.

Aus der US 4 353 855 A ist ein Druckstempel zum Versiegeln von Folien, mit einem beheizbaren Stempelelement mit einer Stempelfläche zum Ausüben eines Druckes auf eine erste Folie, um diese mit einer abgestützten zweiten Folie zu verbinden, wobei das Stempelelement mehrschichtig aufgebaut ist und im wesentlichen drei Schichten enthält. Dabei ist sind zwei äußere begrenzende Schichten vorgesehen, die eine zirkulierende Heizflüssigkeit Flüssigkeit umschließen.

### Aufgabenstellung

Aufgabe der Erfindung ist es deshalb, einen Druckstempel-Vorrichtung zu schaffen, die eine homogene interne Temperaturverteilung aufweist, um dadurch das Entstehen von Höhenprofilen an der Druckfläche zu minimieren und insbesondere eine harte Druckstempeloberfläche zu erzeugen.

Für eine Vorrichtung der eingangs genannten Art wird diese Aufgabe dadurch gelöst, dass eine beheizte zentrale Schicht aus einem ersten Material mit einem hohen Wärmeleitwert von zwei peripheren Schichten aus einem zweiten Material umgeben ist, die beiden peripheren Schichten identische Stärken aufweisen und die Stirnfläche einer der peripheren Schichten die Stempelfläche bildet.

Bevorzugte Ausführungsformen der Erfindung sind Gegenstand der Unteransprüche.

Bei der erfindungsgemäßen Vorrichtung wird durch die Merkmalskombination, dass das Stempelelement mehrschichtig aufgebaut ist und im wesentlichen drei Schichten enthält, wobei eine beheizte zentrale Schicht aus einem ersten Material mit einem hohen Wärmeleitwert von zwei peripheren Schichten aus einem zweiten Material umgeben ist und die Stirnfläche einer der peripheren Schichten die Stempelfläche bildet, erreicht, dass eine Vorrichtung geschaffen ist, bei der aufgrund der hohen Wärmeleitfähigkeit des Materials der zentralen Schicht in Verbindung mit dem symmetrischen sandwichartigen Aufbau des Stempelelementes interne Spannungen dahingehend vermieden werden, dass aufgrund des unterschiedlichen TemperaturAusdehnungskoeffizienten des Materials der zentralen Schicht und des Materials der peripheren Schichten eine seitliche Verbiegung des Stempelelementes entsteht, wie dies bei einem thermisch asymmetrischen, beispielsweise zweischichtigen Aufbau nach Art eines Bimetallstreifens der Fall wäre.

Bei einer Ausführung der zentralen Schicht aus Kupfer ist die Wärmeleitfähigkeit gegenüber einer Ausführung der peripheren Schichten aus Stahl etwa siebenfach höher, wodurch eine weitgehend homogene Temperaturverteilung in der zentralen Schicht erreicht wird, die ihrerseits als Heizelement für die beiden sandwichartig darüber bzw. darunter angeordneten peripheren Stahlschichten wirkt.

Quintessentiell wird deshalb mit dem erfindungemäßen Aufbau einer Druckstempel-Vorrichtung neben der Ausbildung einer bei allen Temperaturen äußerst planen Stempelschicht erreicht, dass sich das erfindungsgemäße Stempelelement insgesamt bei einem Aufwärmvorgang lediglich in seiner den Grenzflächen zwischen den unterschiedlichen Materialschichten parallelen Längsrichtung ausdehnt und bei einem Abkühlvorgang entsprechend zusammenzieht, wohingegen eine seitliche Verkrümmung nach Art eines Bimetallstreifens verhindert ist. Die erfindungsgemäße Vorrichtung ist daher in sich thermisch symmetrisch ausgebildet. Die peripheren Schichten sind dabei ausgelegt um den Zweck zu erfüllen, die für einen Stempelvorgang notwendige Materialhärte sicherzustellen.

Gemäß einer ersten bevorzugten Ausführungsform der erfindungsgemäßen Vorrichtung ist vorgesehen, dass die beiden peripheren Schichten identische Stärken aufweisen. Dadurch wird eine thermische Symmetrie auf eine sehr einfache mechanische Weise erreicht. Eine für einen Verbindungsvorgang zweier Folien notwendige thermische Aufheizung erfolgt vorzugsweise über Heizelemente, die in Bohrungen in der zentralen Schicht vorgesehen sind. Die Heizelemente sind dabei vorzugsweise von elektrisch beheizbaren Heizdrähten gebildet.

Die zentrale Schicht kann beispielsweise aus Kupfer oder Aluminium hergestellt sein und weist dann typischerweise eine Dicke von etwa 20 mm auf. Die peripheren Schichten können beispielsweise jeweils aus Stahl hergestellt sein und weisen dann typischerweise eine Dicke von etwa 10 mm bis 15 mm auf.

Das Stempelelement ist vorzugsweise rechteckig ausgebildet. Alternativ kann das Stempelelement auch kreisförmig ausgebildet sein. Vorzugsweise ist das Stempelelement quadratisch ausgebildet und weist dabei typischerweise eine Kantenlänge von etwa 300 mm auf.

Gemäß einer weiteren bevorzugten Ausführungsform der erfindungsgemäßen Vorrichtung ist vorgesehen, dass in einem dezentralen Bereich der peripheren Schichten des Stempelelementes ein Langloch ausgebildet ist und im Bereich der Langlöcher in der zentralen Schicht eine Bohrung ausgebildet ist, in die ein weiterer Stift schlüssig eingebracht ist, der verschiebbar in den Langlöchern gelagert ist. Dadurch wird ein Zusammenhalt und ein Verhindern einer seitlichen Verschiebung der verschiedenen Schichten erreicht.

Gemäß einer anderen wichtigen bevorzugten Ausführungsform der erfindungsgemäßen Vorrichtung ist vorgesehen, dass in einem dezentralen Bereich des Stempelelementes ein durch alle Schichten Hindurchgeführtes Langloch ausgebildet ist, in das ein weiterer Stift schlüssig eingebracht ist. Dadurch wird ein Verhindern eines Verdrehens der unterschiedlichen Schichten auch bei thermisch bedingter, unterschiedlich starker Ausdehnung der Schichten erreicht.

Die peripheren Schichten der erfindungsgemäßen Vorrichtung sind vorzugsweise über durch die zentrale Schicht geführte Schrauben fest miteinander verbunden.

### Auführungsbeispiel

Die erfindungsgemäße Vorrichtung wird im folgenden anhand einer bevorzugten Ausführungsform erläutert, die in den Figuren der Zeichnung dargestellt ist. Darin zeigen:
Fig. 1 eine erste bevorzugte Ausführungsform der erfindungsgemäßen Vorrichtung in einer Ansicht von schräg oben;
Fig. 2 die in Fig. 1 dargestellte bevorzugte Ausführungsform der erfindungsgemäßen Vorrichtung in einer Querschnittsansicht.

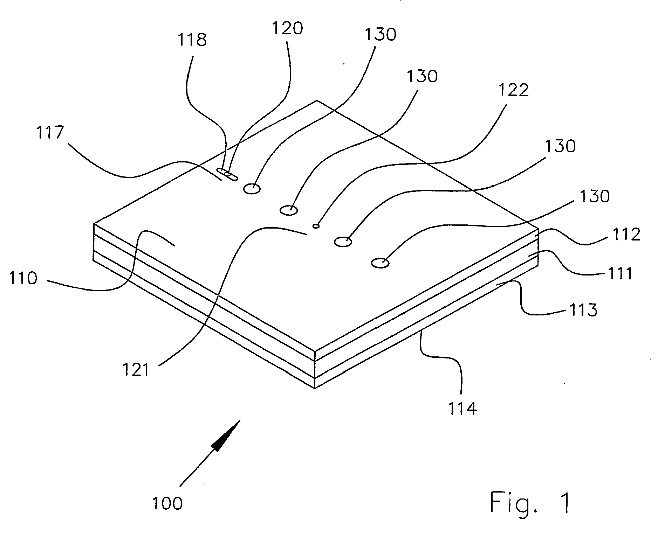

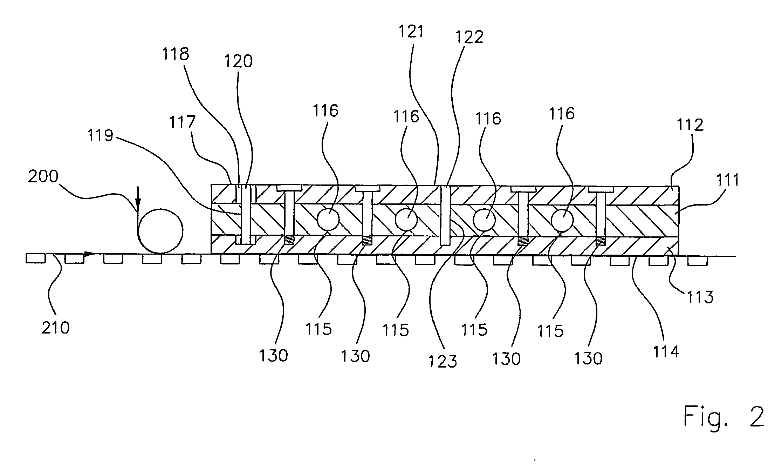

Die in den Fig. 1 und Fig. 2 dargestellte erfindungsgemäße Druckstempel-Vorrichtung 100 zum Versiegeln von Folien enthält ein beheizbares Stempelelement 110 mit einer Stempelfläche 114 zum Ausüben eines Druckes auf eine erste Folie 200, um diese mit einer abgestützt gelagerten zweiten Folie 210 zu verbinden, wobei erfindungswesentlich das Stempelelement 110 drei Schichten 111, 112, 113, enthält, wobei eine beheizte zentrale Schicht 111 aus einem ersten Material mit einem hohen Wärmeleitwert von zwei peripheren Schichten 112, 113 aus einem zweiten Material umgeben ist und die Stirnfläche 114 einer der peripheren Schichten 112, 113 die Stempelfläche bildet. In der zentralen Schicht 111 sind Bohrungen 115 ausgebildet, durch die elektrisch beheizbare Heizdrähte 116 als Heizelemente geführt sind.

Das Stempelelement 110 ist quadratisch ausgebildet und weist eine Kantenlänge von etwa 300 mm auf, wobei die beiden peripheren Schichten 112, 113 identische Stärken aufweisen. Die zentrale Schicht 111 ist aus Kupfer hergestellt und weist eine Dicke von etwa 20 mm auf. Die peripheren Schichten 112, 113 sind jeweils aus Stahl hergestellt und weisen eine Dicke von etwa 12 mm aufweist.

In einem dezentralen Bereich 117 der peripheren Schichten 112, 113 des Stempelelementes 110 ist ein Langloch 118 ausgebildet, wobei im Bereich der Langlöcher 118 in der zentralen Schicht 111 eine Bohrung 119 ausgebildet ist, in die ein weiterer Stift 120 schlüssig eingebracht ist, der verschiebbar in den Langlöchern 118 gelagert ist. Des weiteren ist in einem zentralen Bereich 121 des Stempelelementes 110 eine durch alle Schichten hindurch geführte Bohrung 123 ausgebildet, in die ein weiterer Stift 122 schlüssig eingebracht ist.

Die peripheren Schichten 112, 113 sind über durch die zentrale Schicht 111 geführte Schrauben 130 fest miteinander verbunden.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Druckstempel-Vorrichtung (100) zum Versiegeln von Folien, mit einem beheizbaren Stempelelement (110) mit einer Stempelfläche (114) zum Ausüben eines Druckes auf eine erste Folie (200), um diese mit eines abgestützt gelagerten zweiten Folie (210) zu verbinden, wobei das Stempelelement (110) mehrschichtig aufgebaut ist und im wesentlichen drei Schichten (111, 112, 113) enthält,
**dadurch gekennzeichnet,**
**dass** eine beheizte zentrale Schicht (111) aus einem ersten Material mit einem hohen Wärmeleitwert von zwei peripheren Schichten (112, 113) aus einem zweiten Material umgeben ist, die beiden peripheren Schichten (112, 113) identische Stärken aufweisen und die Stirnfläche (114) einer der peripheren Schichten (112, 113) die Stempelfläche bildet.

2. Vorrichtung nach Anspruch 1,
**dadurch gekennzeichnet,**
**dass** die zentrale Schicht (111) aus Kupfer hergestellt ist.

3. Vorrichtung nach Anspruch 1,
**dadurch gekennzeichnet,**
**dass** die zentrale Schicht (111) aus Aluminium hergestellt ist.

4. Vorrichtung nach einem der vorhergehenden Ansprüche,
**dadurch gekennzeichnet,**
**dass** die zentrale Schicht (111) eine Dicke von etwa 20 mm aufweist.

5. Vorrichtung nach einem oder mehr der vorhergehenden Ansprüche,
**dadurch gekennzeichnet,**
**dass** die peripheren Schichten (112, 113) jeweils aus Stahl hergestellt sind.

6. Vorrichtung nach Anspruch 5,
**dadurch gekennzeichnet,**
**dass** die Stahlschicht eine Dicke von etwa 10 mm bis 15 mm aufweist.

7. Vorrichtung nach einem oder mehr der vorhergehenden Ansprüche,
**dadurch gekennzeichnet,**
**dass** in der zentralen Schicht (111) Bohrungen ausgebildet sind, durch die Heizelemente geführt sind.

8. Vorrichtung nach Anspruch 7,
**dadurch gekennzeichnet,**
**dass** die Heizelemente von elektrisch beheizbaren Heizdrähten gebildet sind.

9. Vorrichtung nach einem oder mehr der Ansprüche 1 bis 8,
**dadurch gekennzeichnet,**
**dass** das Stempelelement (110) rechteckig ausgebildet ist.

10. Vorrichtung nach einem oder mehr der Ansprüche 1 bis 8,
**dadurch gekennzeichnet,**
**dass** das Stempelelement kreisförmig ausgebildet ist.

11. Vorrichtung nach einem oder mehr der vorhergehenden Ansprüche,
**dadurch gekennzeichnet,**
**dass** in einem zentralen Bereich des Stempelelementes (110) eine durch alle Schichten hindurch geführte hohlzylindrische Bohrung vorgesehen ist, in die ein zylindrischer Stift schlüssig eingebracht ist.

12. Vorrichtung nach einem oder mehr der vorhergehenden Ansprüche,
**dadurch gekennzeichnet,**
**dass** in einem dezentralen Bereich (117) der peripheren Schichten des Stempelelementes (110) ein Langloch (118) ausgebildet ist und im Bereich der Langlöcher (118) in der zentralen Schicht (111) eine Bohrung (119) ausgebildet ist, in die ein weiterer Stift (120) schlüssig eingebracht ist, der verschiebbar in den Langlöchern (118) gelagert ist.

13. Vorrichtung nach einem oder mehr der vorhergehenden Ansprüche,
**dadurch gekennzeichnet,**
**dass** die peripheren Schichten (112, 113) über durch die zentrale Schicht (111) geführte Schrauben (130) fest miteinander verbunden sind.

14. Vorrichtung nach einem oder mehr der vorhergehenden Ansprüche,
**dadurch gekennzeichnet,**
**dass** das Stempelelement (110) quadratisch ausgebildet ist und dabei eine Kantenlänge von etwa 300 mm aufweist.

## Claims

1. Pressure-punch device (100) for sealing films, comprising a heatable punching element (110) with a punching face (114) for exerting a pressure on a first film (200), in order to join this film to a second film (210) mounted in a supported manner, the punching element (110) being of a multilayered structure and substantially comprising three layers (111, 112, 113), **characterized in that** a heated central layer (111) of a first material with a high thermal conductivity is surrounded by two peripheral layers (112, 113) of a second material, the two peripheral layers (112, 113) have identical thicknesses and the end face (114) of one of the peripheral layers (112, 113) being the punching face.

2. Device according to Claim 1, **characterized in that** the central layer (111) is made of copper.

3. Device according to Claim 1, **characterized in that** the central layer (111) is made of aluminium.

4. Device according to one of the preceding claims, **characterized in that** the central layer (111) has a thickness of approximately 20 mm.

5. Device according to one or more of the preceding claims, **characterized in that** the peripheral layers (112, 113) are respectively made of steel.

6. Device according to Claim 5, **characterized in that** the steel layer has a thickness of approximately 10 mm to 15 mm.

7. Device according to one or more of the preceding claims, **characterized in that** bores through which heating elements are led are formed in the central layer (111).

8. Device according to Claim 7, **characterized in that** the heating elements are formed by electrically heatable heating wires.

9. Device according to one or more of Claims 1 to 8, **characterized in that** the punching element (110) is rectangularly formed.

10. Device according to one or more of Claims 1 to 8, **characterized in that** the punching element is circularly formed.

11. Device according to one or more of the preceding claims, **characterized in that** a hollow-cylindrical bore which is made to pass through all the layers and in which a cylindrical pin is snugly fitted is provided in a central region of the punching element (110).

12. Device according to one or more of the preceding claims, **characterized in that** an elongated hole (118) is formed in a decentralized region (117) of the peripheral layers of the punching element (110) and a bore (119), in which a further pin (120) that is displaceably mounted in the elongated holes (118) is snugly fitted, is formed in the central layer (111) in the region of the elongated holes (118).

13. Device according to one or more of the preceding claims, **characterized in that** the peripheral layers (112, 113) are firmly connected to one another by means of screws (130) led through the central layer (111) .

14. Device according to one or more of the preceding claims, **characterized in that** the punching element (110) is squarely formed and thereby has an edge length of approximately 300 mm.

## Revendications

1. Dispositif tampon de pression (100) pour sceller des feuilles, comprenant un élément tampon chauffable (110) avec une surface de tampon (114) destinée à exercer une pression sur une première feuille (200), afin de l'assembler à une deuxième feuille (210) agencée de manière supportée, l'élément tampon (110) étant construit en plusieurs couches et contenant essentiellement trois couches (111, 112, 113),
**caractérisé en ce**
**qu'**une couche centrale chauffée (111) en un premier matériau ayant un coefficient de conductibilité thermique élevé est entourée par deux couches périphériques (112, 113) en un deuxième matériau, les deux couches périphériques (112, 113) présentant des épaisseurs identiques et la face frontale (114) de l'une des couches périphériques (112, 113) formant la surface de tampon.

2. Dispositif selon la revendication 1,
**caractérisé en ce que**
la couche centrale (111) est en cuivre.

3. Dispositif selon la revendication 1,
**caractérisé en ce que**
la couche centrale (111) est en aluminium.

4. Dispositif selon l'une quelconque des revendications précédentes,
**caractérisé en ce que**
la couche centrale (111) présente une épaisseur d'environ 20 mm.

5. Dispositif selon l'une quelconque ou plusieurs des revendications précédentes,
**caractérisé en ce que**
les couches périphériques (112, 113) sont chacune en acier.

6. Dispositif selon la revendication 5,
**caractérisé en ce que**
la couche en acier présente une épaisseur d'environ 10 mm à 15 mm.

7. Dispositif selon l'une quelconque ou plusieurs des revendications précédentes,
**caractérisé en ce que**
des alésages sont réalisés dans la couche centrale (111) à travers lesquels sont guidés des éléments chauffants.

8. Dispositif selon la revendication 7,
**caractérisé en ce que**
les éléments chauffants sont formés par des fils chauffants à chauffage électrique.

9. Dispositif selon l'une quelconque ou plusieurs des revendications 1 à 8,
**caractérisé en ce que**
l'élément tampon (110) est rectangulaire.

10. Dispositif selon l'une quelconque ou plusieurs des revendications 1 à 8,
**caractérisé en ce que**
l'élément tampon est circulaire.

11. Dispositif selon l'une quelconque ou plusieurs des revendications précédentes,
**caractérisé en ce que**
dans une région centrale de l'élément tampon (110), on prévoit un alésage cylindrique creux passant à travers toutes les couches, dans lequel est introduite, par liaison fermée, une broche cylindrique.

12. Dispositif selon l'une quelconque ou plusieurs des revendications précédentes,
**caractérisé en ce qu'**un trou oblong (118) est réalisé dans une région non centrale (117) des couches périphériques de l'élément tampon (110), et un alésage (119) est réalisé dans la région des trous oblongs (118) dans la couche centrale (111), dans lequel est introduite, par liaison fermée, une autre broche (120) qui est montée de manière coulissante dans les trous oblongs (118).

13. Dispositif selon l'une quelconque ou plusieurs des revendications précédentes,
**caractérisé en ce que**
les couches périphériques (112, 113) sont connectées fixement les unes aux autres par le biais de vis (130) guidées à travers la couche centrale (111).

14. Dispositif selon l'une quelconque ou plusieurs des revendications précédentes,
**caractérisé en ce que**
l'élément tampon (110) est carré et présente une longueur de bord d'environ 300 mm.
